# EUROPÄISCHE PATENTANMELDUNG

(11) **EP 2 361 542 A2**
(43) Veröffentlichungstag der Anmeldung: **31.08.2011**
(21) Anmeldenummer: 11153132.3
(22) Anmeldetag: 03.02.2011
(51) Int. Cl.: A47L 15/42, C02F 1/42

(54) **Enthärtungsmodul für ein wasserführendes Haushaltsgerät**

(30) Priorität: 19.02.2010 DE 102010002149
(71) Anmelder: BSH Bosch und Siemens Hausgeräte GmbH, 81739 München (DE)
(72) Erfinder: Jerg, Helmut, 89537 Giengen (DE); Rosenbauer, Michael Georg, 86756 Reimlingen (DE)

(57) **Zusammenfassung**

Vorgeschlagen wird ein Enthärtungsmodul zur Enthärtung von Rohwasser (RW) für wenigstens ein wasserführendes Haushaltsgerät (1, 2), welches als außerhalb des wenigstens einen wasserführenden Haushaltsgeräts (1, 2) anordenbare Baueinheit (3) ausgeführt ist und welches eine Rohwasserzulaufeinrichtung (14), die zur Aufnahme des Rohwassers (RW) mit einer externen Rohwasserversorgungseinrichtung (WH) verbindbar ist, eine Wasserenthärtungseinrichtung (19) zur Enthärtung des aufgenommenen Rohwassers (RW) sowie wenigstens einen stromabwärts der Wasserenthärtungseinrichtung (19) angeordneten und zum Verbinden mit dem wasserführenden Haushaltsgerät (1, 2) vorgesehen Anschluss (20, 21, 22) zur Abgabe des enthärteten Rohwassers (EW) aufweist.

## Beschreibung

Die vorliegende Erfindung betrifft ein Enthärtungsmodul zur Enthärtung von Rohwasser für wenigstens ein wasserführendes Haushaltsgerät.

In modernen Haushalten ist der Gebrauch einer Vielzahl von wasserführenden Haushaltsgeräten üblich. Derartige wasserführende Haushaltsgeräte, wie beispielsweise Haushaltsgeschirrspülmaschinen, Dampfgarer, Kaffeemaschinen, Wasserspender, Eiswürfelbereiter, Teebereiter, Dampfbügelstationen, usw. ... , können einen Anschluss zur Aufnahme von Wasser aufweisen, der üblicherweise mit einer gebäudeseitig installierten Wasserversorgungseinrichtung verbunden wird, so dass das jeweilige Haushaltsgerät bedarfsabhängig Wasser aufnehmen kann.

Nachteilig hierbei ist, dass das durch haushaltsübliche Wasserversorgungseinrichtungen bereitgestellte Wasser vielfach eine derart hohe Wasserhärte aufweist, dass es zu Funktionsstörungen und/oder Schäden an den angeschlossenen Haushaltsgeräten kommen kann.

Die Aufgabe der vorliegenden Erfindung besteht darin, derartige Funktionsstörungen und/oder Schäden an wasserführenden Haushaltsgeräten zumindest zu verringern.

Die Aufgabe wird durch ein Enthärtungsmodul der eingangs genannten Art gelöst, welches als außerhalb des wenigstens einen wasserführenden Haushaltsgeräts anordenbare Baueinheit ausgeführt ist und welches eine Rohwasserzulaufeinrichtung, die zur Aufnahme des Rohwassers mit einer externen Rohwasserversorgungseinrichtung verbindbar ist, eine Wasserenthärtungseinrichtung zur Enthärtung des aufgenommenen Rohwassers sowie wenigstens einen stromabwärts der Wasserenthärtungseinrichtung angeordneten und zum Verbinden mit dem wasserführenden Haushaltsgerät vorgesehenen Anschluss zur Abgabe des enthärteten Rohwassers aufweist.

Bei dem erfindungsgemäßen Enthärtungsmodul kann bei bestimmungsgemäßem Gebrauch das von der externen Rohwasserversorgungseinrichtung, beispielsweise von einer gebäudeseitig installierten Wasserinstallation, bereitgestellte Rohwasser über die Rohwasserzulaufeinrichtung aufgenommen und der Wasserenthärtungseinrichtung zugeführt werden. Die Wasserenthärtungseinrichtung kann nun das aufgenommene Rohwasser enthärten, indem es im Rohwasser gelöste lonen, insbesondere Erdalkali-lonen, wie beispielsweise Kalzium-Kationen (Ca²⁺) und/oder Magnesium-Kationen (Ma²⁺), aus dem Rohwasser entfernt und/oder in einen Zustand versetzt, in dem sie zumindest weniger zu störenden Wirkungen neigen. Das so enthärtete Rohwasser kann dann über den dazu vorgesehenen Anschluss an das daran angeschlossene Haushaltsgerät abgegeben werden.

Bei dem an das Enthärtungsmodul angeschlossenen Haushaltsgerät kann so insbesondere die Bildung von Kesselsteinablagerungen vermindert oder gar verhindert werden, welche ansonsten durch Ausfällung der im unbehandelten Rohwasser enthaltenen Ionen entstehen würden. Auf diese Weise können Schäden am wasserführenden System des Haushaltsgeräts, wie beispielsweise Undichtigkeiten oder Verstopfungen, weitgehend vermieden werden. Zudem können unerwünschte Wechselwirkungen der lonen mit Betriebsstoffen des Haushaltsgeräts vermieden werden. So kann beispielsweise bei einer Geschirrspülmaschine verhindert werden, dass die Reinigungswirkung von Reinigungsmitteln durch die durch lonen hervorgerufene Bildung von Kalkseifen vermindert wird.

Da das erfindungsgemäße Enthärtungsmodul als außerhalb der wasserführenden Haushaltsgeräte anordenbare Baueinheit ausgeführt ist, kann es universell zur Versorgung eines oder mehrerer Haushaltsgeräte mit enthärtetem Rohwasser verwendet werden. Das erfindungsgemäße Enthärtungsmodul kann insbesondere auch bei Haushaltsgeräten mit kompakten Gehäuseabmessungen verwendet werden, welche einen Einbau eines Enthärtungsmoduls nicht erlauben würden. Beispielsweise kann das erfindungsgemäße Enthärtungsmodul problemlos bei Kleingeräten, wie beispielsweise Kaffeemaschinen, Eiswürfelbereitern und dergleichen, bei Auftischgeschirrspülmaschinen und/oder bei Geschirrspülmaschinen mit einer Breite von lediglich 45 cm eingesetzt werden.

Das erfindungsgemäße Enthärtungsmodul eignet sich insbesondere zur Verwendung in einer Küche, da dort in vielen Fällen gleich mehrere wasserführende Haushaltsgeräte betrieben werden. Es kann dabei insbesondere in einem Sockelbereich einer Küchenzeile oder in einem Küchenschrank untergebracht werden.

Gemäß einer zweckmäßigen Weiterbildung der Erfindung ist eine automatische Steuereinrichtung zur Steuerung des Enthärtungsmoduls vorgesehen, welche zur Verarbeitung von Steuerbefehlen ausgebildet ist, welche von einem angeschlossenen wasserführenden Haushaltsgerät zum Enthärtungsmodul übertragbar sind. Durch eine derart ausgebildete Steuereinrichtung ist es möglich, den Funktionsablauf des Enthärtungsmoduls an einen Funktionsablauf eines angeschlossenen wasserführenden Haushaltsgeräts anzupassen. Insbesondere kann so die Aufnahme des Rohwassers durch das Enthärtungsmodul, die Enthärtung des Rohwassers und/oder die Abgabe des enthärteten Rohwassers durch das Enthärtungsmodul automatisch an den Rohwasserbedarf des wasserführenden Haushaltsgeräts angepasst werden. Auf diese Weise erhöht sich der Bedienkomfort. Zudem kann so die Gefahr der Abgabe von nicht hinreichend enthärtetem Rohwasser an ein angeschlossenes Haushaltsgerät aufgrund eines Bedienfehlers verhindert werden. Die Steuereinrichtung kann beispielsweise als elektronische Steuereinrichtung ausgebildet sein.

Nach einer vorteilhaften Weiterbildung der Erfindung ist das Enthärtungsmodul als Durchlaufenthärtungsmodul ausgebildet. Unter einem Durchlaufenthärtungsmodul wird dabei insbesondere ein Enthärtungsmodul verstanden, bei dem das Rohwasser enthärtet werden kann, während es in einem abgeschlossenen Leitungssystem ohne Zwischenspeicherung von der Rohwasserzulaufeinrichtung zu dem Anschluss zur Abgabe des enthärteten Rohwassers fließt. Hierdurch ist die Aufnahme von Rohwasser, die Enthärtung des Rohwassers und die Abgabe des enthärteten Rohwassers praktisch ohne Zeitverzug möglich.

Gemäß einer vorteilhaften Weiterbildung der Erfindung umfasst die Wasserenthärtungseinrichtung einen lonentauscher. Bei der Wasserenthärtung mittels eines lonentauschers werden die störenden lonen, insbesondere Erdalkali-lonen, wie beispielsweise Kalzium-Kationen (Ca²⁺) und/oder Magnesium-Kationen (Ma²⁺), aus dem Rohwasser entfernt, indem sie durch zumindest weniger störende lonen, wie beispielsweise Natrium-lonen (Na⁺) ersetzt werden. Der lonentauscher enthält dabei ein lonentauschermaterial, beispielsweise ein lonentauscherharz, welches vom Rohwasser durchströmbar ist, um dabei die störenden lonen durch Austausch-lonen zu ersetzen. Hierbei werden die störenden lonen im lonentauschermaterial zurückgehalten, so dass das austretende Rohwasser zumindest weniger störende lonen enthält und dadurch enthärtet ist.

Gegenüber chemischen Verfahren, bei denen die Enthärtung durch Bindung der lonen an dem Rohwasser zugegebenen chemischen Substanzen, beispielsweise an Schichtsilikaten oder Triphosphaten, erfolgt, und die gebundenen lonen im Rohwasser verbleiben, werden die lonen beim lonentauscher tatsächlich aus dem Rohwasser entfernt. Hierdurch können hinsichtlich der Vermeidung von Funktionsstörungen und/oder Schäden an wasserführenden Haushaltsgeräten bessere Ergebnisse erreicht werden. Zudem kann auf den Einsatz teils umweltbelastender, teils teurer Chemikalien verzichtet werden. Weiterhin vereinfacht sich der Aufbau des Enthärtungsmoduls, da keine Bevorratungseinrichtung oder Dosiereinrichtung für eine enthärtende Chemikalie erforderlich ist.

Nach einer vorteilhaften Weiterbildung der Erfindung weist die Wasserenthärtungseinrichtung eine Regeneriereinrichtung zum Regenerieren des lonentauschers auf. Die Regeneriereinrichtung kann insbesondere zur Bereitung einer Regenerierflüssigkeit und zum Hindurchleiten der bereiteten Regenerierflüssigkeit durch den lonentauscher ausgebildet sein. So kann die Regeneriereinrichtung einen mit Regeneriermittel befüllbaren Regeneriermittelbehälter umfassen, der einen Eingang für Rohwasser und einen Ausgang für mit Regeneriermittel versetztes Rohwasser aufweist, wobei der Ausgang des Regeneriermittelbehälters mit dem lonentauscher verbunden ist. Die Regenerierflüssigkeit kann beim Durchströmen des lonentauschers die dort gebundenen störenden lonen aufnehmen und durch enthärtend wirkende lonen ersetzt werden. Auf diese Weise kann der lonentauscher prinzipiell für einen unendlichen Zeitraum eingesetzt werden, ohne dass sich seine Wirkung erschöpft. Bei dem Regeneriermittel kann es sich um Natriumchlorid handeln, wobei durch Vermengung mit Rohwasser eine Regeneriersole genannte Regenerierflüssigkeit gebildet wird, die Kalzium-Kationen (Ca²⁺) und/oder Magnesium-Kationen (Ma²⁺) aufnehmen und Natrium-lonen (Na⁺) abgeben kann.

Gemäß einer zweckmäßigen Weiterbildung der Erfindung weist das Enthärtungsmodul einen Anschluss zur Abgabe einer Regenerierflüssigkeit auf, der zum Verbinden mit einer externen Wasserentsorgungseinrichtung vorgesehen ist. Die Regenerierflüssigkeit , welche bei der Regenerierung des lonentauschers anfällt, ist in aller Regel nicht als Rohwasser für ein wasserführendes Haushaltsgerät geeignet. Der vorgesehene Anschluss zur Abgabe einer Regenerierflüssigkeit ermöglicht nun eine einfache und automatische Entsorgung der nicht mehr benötigten Regenerierflüssigkeit über die externe Wasserentsorgungseinrichtung.

Nach einer vorteilhaften Weiterbildung der Erfindung ist wenigstens einer der Anschlüsse zur Abgabe des enthärteten Rohwassers und/oder der Anschluss zur Abgabe der Regenerierflüssigkeit selbstschließend ausgebildet. Ein selbstschließender Anschluss ist derart ausgebildet, dass ein Austritt von Flüssigkeit, also von Rohwasser bzw. Regenerierflüssigkeit, nur möglich ist, wenn der Anschluss mit einem geeigneten Gegenstück, beispielsweise mit einem Anschlussstück einer Leitung, verbunden ist. Auf diese Weise kann ein Austritt von Rohwasser bzw. Regenerierflüssigkeit vermieden werden, wenn die Belegung des jeweiligen Anschlusses versehentlich unterblieben ist.

Nach einer zweckmäßigen Weiterbildung der Erfindung ist wenigstens einem der Anschlüsse zur Abgabe des enthärteten Rohwassers und/oder dem Anschluss zur Abgabe der Regenerierflüssigkeit ein Ausgangsventil zugeordnet. Auf diese Weise kann die Abgabe von enthärtetem Rohwasser durch das Enthärtungsmodul selbst gesteuert werden. Insbesondere können so wasserführende Haushaltsgeräte an das Enthärtungsmodul angeschlossen werden, welche selbst über kein Eingangsventil verfügen, ohne dass es dabei zu einer unkontrollierten Abgabe von enthärtetem Rohwasser kommt.

Gemäß einer zweckmäßigen Weiterbildung der Erfindung umfasst die Rohwasserzulaufeinrichtung ein steuerbares Zulaufventil. Hierdurch kann die Aufnahme des Rohwassers über den Rohwasserzulauf, insbesondere zur Enthärtung von Rohwasser oder zur Regenerierung des lonentauschers, bedarfsgerecht gesteuert werden. Das Zulaufventil kann dabei von der Steuereinrichtung des Enthärtungsmoduls oder von der Steuereinrichtung eines angeschlossenen Haushaltsgeräts gesteuert sein.

Nach einer zweckmäßigen Weiterbildung der Erfindung ist vorgesehen, dass das Zulaufventil an einem stromaufwärtigen Ende eines Zulaufschlauchs des Enthärtungsmoduls angeordnet und so ausgebildet ist, dass es an einem Anschlussstück der externen Wasserversorgungseinrichtung befestigbar ist. Das Zulaufventil kann hierzu beispielsweise ein Anschlussgewinde aufweisen, welches mit einem Gewinde von haushaltsüblichen Wasserhähnen korrespondiert. Derartige Ventile sind auch als Aquastop-Ventile bekannt.

Die Anordnung des Zulaufventils am stromaufwärtigen Ende der Wasserzulaufeinrichtung weist den Vorteil auf, dass aus dem Enthärtungsmodul auch in einem Schadensfall praktisch kein Leckwasser austreten kann, solange das Zulaufventil geschlossen ist. Wenn das Zulaufventil so ausgeführt ist, dass es schließt, wenn es nicht angesteuert ist, ist ein größerer Austritt von Leckwasser aus einem abgeschalteten Enthärtungsmodul praktisch in allen Fällen verhindert.

Nach einer vorteilhaften Weiterbildung der Erfindung ist ein Leckwassersensor vorgesehen. Ein derartiger Sensor ist zum Erfassen von im Bereich des Enthärtungsmoduls austretendem Leckwasser vorgesehen. Er kann beispielsweise an einer in einem Bodenbereich des Enthärtungsmoduls vorgesehenen Leckwasserauffangwanne angeordnet sein. Der Leckwassersensor kann mit der Steuereinrichtung des Enthärtungsmoduls oder mit der Steuereinrichtung eines angeschlossenen Haushaltsgeräts verbunden sein, so dass die jeweilige Steuereinrichtung das Enthärtungsmodul bei erkanntem Leckwasser abschalten kann. Insbesondere kann sie das Enthärtungsmodul stromlos setzen und das Zulaufventil schließen. Auf diese Weise kann auch ein größerer Austritt von Leckwasser bei einem zunächst eingeschalteten Enthärtungsmodul verhindert werden.

Gemäß einer zweckmäßigen Weiterbildung der Erfindung sind sämtliche wasserführende Komponenten für einen statischen Druck von wenigstens 8 bar, bevorzugt von wenigstens 10 bar und besonders bevorzugt von wenigstens 12 bar, ausgelegt. Bei den genannten Druckwerten handelt es sich jeweils um einen typischen Maximaldruck in einer haushaltsüblichen Wasserversorgungsinstallation. Bei diesen Druckwerten handelt es sich gleichzeitig um den jeweils maximalen statischen Druck im Enthärtungsmodul, der sich dann einstellt, wenn der Rohwasserzulauf geöffnet und sämtliche Ausgänge des Enthärtungsmoduls geschlossen sind. Wenn nun sämtliche wasserführende Komponenten, wie beispielsweise Ventile, Leitungen, Anschlüsse usw. diesen Drücken standhalten können, kann das Enthärtungsmodul auch ohne Eingangsventil ausgeführt sein.

Nach einer zweckmäßigen Weiterbildung der Erfindung umfasst die Rohwasserzulaufeinrichtung einen Rücksaugverhinderer. Ein Rücksaugverhinderer dient dazu, ein Rücksaugen von Flüssigkeiten aus dem Enthärtungsmodul zu verhindern, falls in der externen Wasserversorgungseinrichtung durch dynamische Prozesse ein Unterdruck entsteht. Hierdurch wird insbesondere verhindert, dass bereits an das wasserführende Haushaltsgerät geliefertes Wasser, welches mit Schmutz, Reinigungsmitteln und/oder Reinigungshilfsmitteln versetzt sein kann, und/oder Regenerierflüssigkeit zurück in die gebäudeseitige Wasserversorgung gelangt. Bei dem Rücksaugverhinderer kann es sich beispielsweise um ein Rückschlagventil, oder eine freie Fliesstrecke handeln.

Nach einer vorteilhaften Weiterbildung der Erfindung umfasst die Rohwasserzulaufeinrichtung einen Durchflusszähler zur Ermittlung der Menge des aufgenommenen Rohwassers. Der Durchflusszähler kann insbesondere dazu herangezogen werden, Regeneriervorgänge zum Regenerieren des lonentauschers bedarfsgerecht zu steuern. Beispielsweise kann vorgesehen sein, dass ein Regeneriervorgang automatisch eingeleitet wird, wenn der Durchflusszähler eine Menge von aufgenommenem Rohwasser registriert, welche einem Vorgabewert entspricht.

Nach einer vorteilhaften Weiterbildung der Erfindung ist das Enthärtungsmodul zur Montage an einer Wand vorbereitet. Hierzu kann das Enthärtungsmodul Befestigungsabschnitte aufweisen, welche beispielsweise als Befestigungslaschen ausgebildet sein können. Die Befestigungsabschnitte können Befestigungslöcher und/oder -schlitze zum Befestigen des Enthärtungsmoduls mit Schrauben, Haken oder dergleichen an einer Wand umfassen. Hierdurch ist es in einfacher Weise möglich, das Enthärtungsmodul platzsparend an einer Gebäudewand oder an einer Schrankwand zu befestigen.

Nach einer weiteren zweckmäßigen Weiterbildung der Erfindung kann das Enthärtungsmodul zum Aufstellen auf einer horizontalen Fläche vorbereitet sein. Hierzu können Stellabschnitte, beispielsweise Stellfüße, vorgesehen sein. Hierdurch ist es möglich, das Enthärtungsmodul ohne weitere Befestigung auf einem Boden, beispielsweise einem Gebäudeboden oder Schrankboden, zu platzieren.

Nach einer vorteilhaften Weiterbildung der Erfindung weist das Enthärtungsmodul ein im Wesentlichen geschlossenes Gehäuse auf. Das Gehäuse kann insbesondere dem Schutz der Wasserenthärtungseinrichtung vor Schmutz und/oder Beschädigung dienen. Ein derartiges Gehäuse erlaubt die Platzierung des Enthärtungsmoduls unabhängig vom Vorhandensein von schützenden Schränken und dergleichen. Hierdurch werden die Einsatzmöglichkeiten des Enthärtungsmoduls erweitert. Zudem können an dem Gehäuse in einfacher Weise Befestigungsabschnitte zur Wandmontage und/oder Stellabschnitte zum Aufstellen des Enthärtungsmoduls auf einem Boden ausgebildet werden.

Die in den abhängigen Ansprüchen wiedergegebenen und/oder vorstehend erläuterten vorteilhaften Weiterbildungen des erfindungsgemäßen Enthärtungsmoduls können einzeln oder in beliebiger Kombination miteinander bei dem erfindungsgemäßen Enthärtungsmodul vorgesehen sein.

Weiterhin betrifft die Erfindung ein wasserführendes Haushaltsgerät, insbesondere eine Haushaltsgeschirrspülmaschine, einen Dampfgarer, eine Kaffeemaschine, einen Wasserspender, einen Eiswürfelbereiter, teebereiter, eine Dampfbügelstation, usw.....

Bei einem solchen Haushaltsgerät wird die eingangs gestellte Aufgabe dadurch gelöst, dass es mit einem erfindungsgemäßen Enthärtungsmodul zur Aufnahme von enthärtetem Rohwasser verbindbar ist und dass es einen Anschluss für eine Steuerleitung aufweist, welcher zur Übertragung von Steuerbefehlen an das Enthärtungsmodul vorgesehen ist.

Auf diese Weise ist es möglich, dass das Haushaltsgerät enthärtetes Rohwasser vom Enthärtungsmodul bezieht. Der direkte Anschluss des Haushaltsgeräts an die externe Wasserversorgungseinrichtung kann dabei entfallen. Durch den Anschluss für die Steuerleitung ist es möglich, die Funktion des Enthärtungsmoduls an den Betriebsablauf des Haushaltsgeräts anzupassen. Insbesondere kann so die Aufnahme des Rohwassers durch das Enthärtungsmodul, das Enthärten des Rohwassers und/oder die Abgabe des enthärteten Rohwassers an den Wasserbedarf des Haushaltsgeräts angepasst werden.

Gemäß einer vorteilhaften Weiterbildung der Erfindung ist ein Steuerbefehl zur Anforderung von enthärtetem Rohwasser übertragbar. Auf diese Weise kann sichergestellt werden, dass das Enthärtungsmodul enthärtetes Rohwasser abgibt, wenn das Haushaltsgerät zur Erfüllung seiner Aufgabe Rohwasser benötigt.

Gemäß einer zweckmäßigen Weiterbildung der Erfindung weist das Haushaltsgerät eine manuell bedienbare Einrichtung zur Erzeugung von über den Anschluss übertragbaren Steuerbefehlen auf. Auf diese Weise können auch einfach aufgebaute Haushaltsgeräte mit dem Enthärtungsmodul zusammenwirken, welche selbst über keine automatische Steuerungseinrichtung verfügen. Die manuell bedienbare Einrichtung zur Erzeugung von Steuerbefehlen kann beispielsweise einen Schalter, beispielsweise einen Tastschalter, umfassen. So kann beispielsweise bei einem Wasserspender ein Tastschalter vorgesehen sein, der mit einer Steuereinrichtung des Enthärtungsmoduls über den Anschluss und einer daran angeschlossenen Steuerleitung verbunden ist und der derart mit der Steuereinrichtung zusammenwirkt, dass dem Wasserspender bei gedrücktem Tastschalter enthärtetes Rohwasser zugeführt wird, welches dieser zeitgleich über einen Wasserauslass abgibt.

Nach einer zweckmäßigen Weiterbildung der Erfindung weist das Haushaltsgerät eine Steuereinrichtung zur Steuerung von Arbeitsprozessen des Haushaltsgeräts auf, welche zusätzlich zur Erzeugung von über den Anschluss übertragbaren Steuerbefehlen ausgebildet ist. Hierdurch können die Arbeitsabläufe des Haushaltsgeräts und des Enthärtungsmoduls auf einfache Weise vollautomatisch koordiniert werden.

Gemäß einer zweckmäßigen Weiterbildung der Erfindung ist das Haushaltsgerät zur Aufnahme einer Regenerierflüssigkeit von dem Enthärtungsmodul und zur Abgabe der Regenerierflüssigkeit an eine externe Abwasserentsorgungseinrichtung ausgebildet. In diesem Fall kann darauf verzichtet werden, das Enthärtungsmodul mit einer externen Abwasserentsorgungseinrichtung zu verbinden. Bei dem Haushaltsgerät kann es sich um ein solches Gerät handeln, welches ohnehin zum Anschließen an eine Abwasserentsorgungseinrichtung vorgesehen ist. Geeignet ist beispielsweise eine Geschirrspülmaschine, wobei die Regenerierflüssigkeit über dieselbe Leitung übertragen werden kann, welche zur Übertragung von enthärtetem Rohwasser vorgesehen ist. Durch einen entsprechenden Informationsaustausch zwischen der Geschirrspülmaschine und dem Enthärtungsmodul kann sichergestellt werden, dass der Geschirrspülmaschine nur dann Regenerierflüssigkeit zugeführt wird, wenn dies den Betriebsablauf der Geschirrspülmaschine nicht stört. Ebenso kann durch den Informationsaustausch sichergestellt werden, dass die Regenerierflüssigkeit umgehend durch die Geschirrspülmaschine an die Abwasserentsorgungseinrichtung abgegeben und nicht etwa zum Spülen von Spülgut verwendet wird.

Die in den abhängigen Ansprüchen wiedergegebenen und/oder vorstehend erläuterten vorteilhaften Weiterbildungen des erfindungsgemäßen wasserführenden Haushaltsgeräts können einzeln oder in beliebiger Kombination miteinander bei dem erfindungsgemäßen Haushaltsgerät vorgesehen sein.

In einem weiteren Aspekt betrifft die vorliegende Erfindung eine Anordnung mit wenigstens einem wasserführenden Haushaltsgerät, insbesondere mit einer Haushaltsgeschirrspülmaschine, einem Dampfgarer, einer Kaffeemaschine, einem Wasserspender und/oder einem Eiswürfelbereiter, usw..... und mit einem Enthärtungsmodul zur Enthärtung von Rohwasser für das wenigstens eine wasserführende Haushaltsgerät.

Bei der erfindungsgemäßen Anordnung ist vorgesehen, dass das wenigstens eine wasserführende Haushaltsgerät und/oder das Enthärtungsmodul erfindungsgemäß ausgebildet ist.

Die Erfindung und ihre Weiterbildungen sowie deren Vorteile werden nachfolgend anhand von Zeichnungen näher erläutert. Es zeigen jeweils schematisch:
- **Figur 1**: ein vorteilhaftes Ausführungsbeispiel einer erfindungsgemäßen Anordnung in einer schematischen Seitenansicht und
- **Figur 2**: eine Funktionsskizze der Anordnung der Figur 1.

In den folgenden Figuren sind einander entsprechende Teile mit denselben Bezugszeichen versehen. Dabei sind nur diejenigen Bestandteile einer erfindungsgemäßen Anordnung mit Bezugszeichen versehen und erläutert, welche für das Verständnis der Erfindung erforderlich sind. Es versteht sich von selbst, dass die erfindungsgemäße Anordnung weitere Teile und Baugruppen umfassen kann.

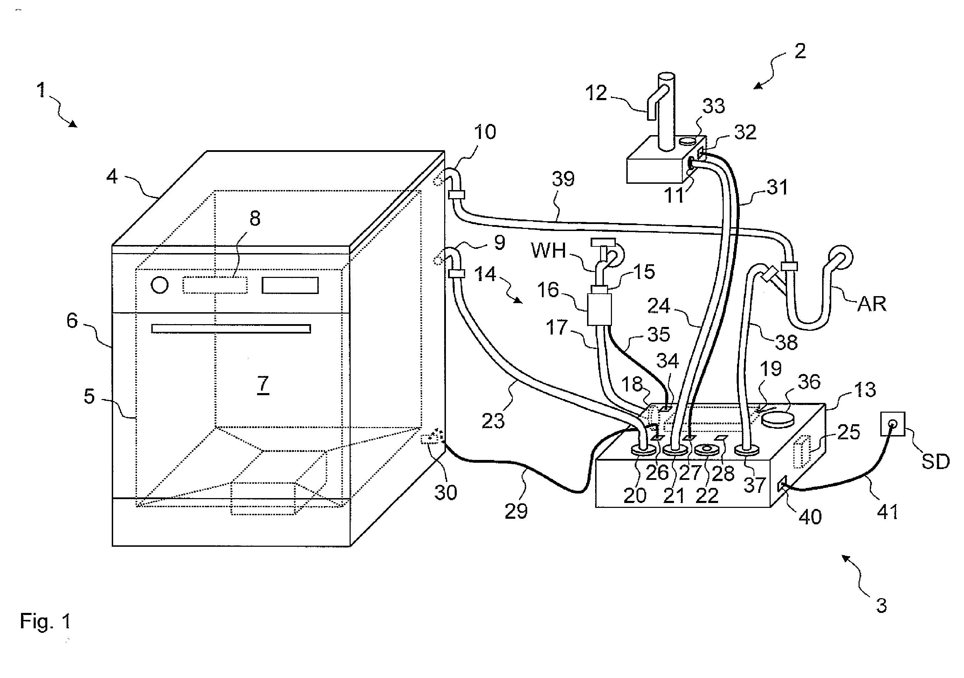

Figur 1 zeigt ein Ausführungsbeispiel einer erfindungsgemäßen Anordnung, welche eine Geschirrspülmaschine 1, einen Wasserspender 2 und ein Enthärtungsmodul 3 umfasst. Bei der Geschirrspülmaschine 1 und dem Wasserspender 2 handelt es sich um Beispiele für wasserführende Haushaltsgeräte im Sinne der vorliegenden Erfindung.

Die Geschirrspülmaschine 1 ist zum Reinigen von Spülgut, insbesondere zum Reinigen von Geschirr, unter Verwendung von Rohwasser vorgesehen. Sie weist ein Gehäuse 4 auf, in dem ein Spülbehälter 5 angeordnet ist. Ggf. kann das Außengehäuse 4 teilweise oder ganz entfallen. Dies ist insbesondere bei Einbau-Geschirrspülmaschinen der Fall. Die Aufwendungen der Geschirrspülmaschine können dann zum größten Teil lediglich durch die Wandungen des Spülbehälters gebildet sein. Dem Spülbehälter 5 ist eine Tür 6 zugeordnet, welche es ermöglicht, Spülgut in den Spülbehälter 5 einzubringen beziehungsweise daraus zu entnehmen. Bei geschlossener Tür 6 entsteht im Inneren des Spülbehälters 5 eine im Wesentlichen geschlossene Spülkammer 7.

Die Geschirrspülmaschine 1 umfasst weiterhin eine Steuereinrichtung 8 zur Steuerung von Spülgängen zum Reinigen von Spülgut. Die Steuereinrichtung 8 kann insbesondere als Ablaufsteuereinrichtung ausgebildet sein, welche zur Steuerung eines Ablaufs eines Spülgangs anhand von einem auswählbaren Spülprogramm ausgebildet ist.

Um das zum Spülen von Spülgut erforderliche Rohwasser aufnehmen zu können, ist ein Zulaufwasseranschluss 9 vorgesehen. Der Zulaufwasseranschluss 9 ist dabei als gerätefestes, insbesondere gehäusefestes Anschlussstück 9 ausgebildet. Weiterhin umfasst die Geschirrspülmaschine 1 einen Abwasseranschluss 10, um nicht mehr benötigtes Wasser als Abwasser abgeben zu können, der als gehäusefestes Anschlussstück 10 ausgebildet ist.

Der Wasserspender 2 dient der manuellen Befüllung von Gefäßen aller Art mit Wasser. Dabei kann es sich beispielsweise um ein Trinkgefäß, ein Kochgefäß oder um einen Wassertank eines Dampfbügeleisens handeln. Der Wasserspender 2 weist dabei einen Zulaufwasseranschluss 11 auf, der zur Aufnahme von Rohwasser vorgesehen ist. Der Zulaufwasseranschluss 11 ist flüssigkeitsleitend mit einem Wasserauslass 12 verbunden, der seinerseits zur Abgabe des aufgenommenen Rohwassers ausgebildet ist.

Bei dem Enthärtungsmodul 3 handelt es sich um eine eigenständige Baueinheit 3, welche unabhängig, d.h. separat bzw. eigenständig von den anzuschließenden wasserführenden Haushaltsgeräten 1, 2 anordenbar ist. Es weist ein im Wesentlichen geschlossenes Gehäuse 13 auf, welches insbesondere eine tragende Funktion und/oder eine schützende Funktion aufweisen kann.

Weiterhin weist das Enthärtungsmodul 3 eine Rohwasserzulaufeinrichtung 14 auf, welche zur Aufnahme von Rohwasser von einer externen Rohwasserversorgungseinrichtung WH ausgebildet ist.

Die Rohwasserzulaufeinrichtung 14 weist an ihrem stromaufwärtigen Ende einen Rohwasseranschluss 15 auf, der bestimmungsgemäß mit der externen Wasserversorgung WH flüssigkeitsleitend verbunden ist, welche im Beispiel der Figur 1 ein gebäudeseitiger installierter Wasserhahn ist. An den Rohwasseranschluss 15 schließt sich ein steuerbares Zulaufventil 16 an. Stromabwärts des Zulaufventils 16 schließt sich eine Wasserzulaufleitung 17 an, welche als flexibler Zulaufschlauch 17 ausgebildet ist. An seinem stromabwärtigen Ende ist der Zulaufschlauch 17 mit einem an dem Gehäuse 13 des Enthärtungsmoduls 3 gerätefest, insbesondere gehäusefest angeordneten Anschlussstück 18 verbunden. Von dort kann das Rohwasser über in Figur 1 nicht gezeigte Mittel zu einer Wasserenthärtungseinrichtung 19 geleitet werden. Diese ist zum Enthärten des von der externen Rohwasserversorgungseinrichtung WH aufgenommenen Rohwassers ausgebildet. Das durch die Wasserenthärtungseinrichtung 19 enthärtete Rohwasser wird dabei Anschlüssen 20, 21, 22 zugeführt, welche zur Abgabe des enthärteten Rohwassers vorgesehen sind.

Im Ausführungsbeispiel ist ein Verbindungsschlauch 23 mit einem Ende mit dem Anschluss 20 des Enthärtungsmoduls 3 und mit seinem anderen Ende mit dem Zulaufwasseranschluss 9 der Geschirrspülmaschine 1 verbunden. Hierdurch ist es möglich, dass die Geschirrspülmaschine 1 enthärtetes Rohwasser vom Enthärtungsmodul 3 bezieht. Weiterhin ist ein Verbindungsschlauch 24 mit einem Ende mit dem Anschluss 21 des Enthärtungsmoduls 3 und mit seinem anderen Ende mit dem Zulaufwasseranschluss 11 des Wasserspenders 2 verbunden, so dass auch der Wasserspender 2 enthärtetes Rohwasser vom Enthärtungsmodul 3 beziehen kann. Der Anschluss 22 des Enthärtungsmoduls 3 zur Abgabe des enthärteten Rohwassers ist im Ausführungsbeispiel nicht belegt. Er könnte aber beispielsweise zur Versorgung einer Kaffeemaschine, eines Eiswürfelbereiters oder eines Dampfgarers, usw.... verwendet werden.

Zur Steuerung des Enthärtungsmoduls 3 weist dieses eine vorzugsweise elektronische Steuereinrichtung 25 auf. Die Steuereinrichtung 25 ist mit Anschlüssen 26, 27, 28 verbunden, welche jeweils zum Anschließen einer Steuerleitung vorgesehen sind, welche zum Verbinden des Enthärtungsmodul 3 mit einem an einen der Anschlüsse 20, 21, 23 angeschlossenen Haushaltsgerät 1, 2 vorgesehen ist.

Im Ausführungsbeispiel ist eine Steuerleitung 29 an den Anschluss 26 des Enthärtungsmoduls 3 und an einen Anschluss 30 der Geschirrspülmaschine 1 angeschlossen. Der Anschluss 30 der Geschirrspülmaschine 1 ist mit deren Steuereinrichtung 8 verbunden, so dass eine Steuerverbindung zwischen dem Enthärtungsmodul 3 und der Steuereinrichtung 8 der Geschirrspülmaschine 1 besteht, welche die Übertragung von Steuerbefehlen und/oder sonstigen Informationen von der Steuereinrichtung 8 der Geschirrspülmaschine 1 zur Steuereinrichtung 25 des Enthärtungsmoduls 3 und/oder umgekehrt ermöglicht.

Weiterhin ist eine Steuerleitung 31 an den Anschluss 27 des Enthärtungsmoduls 3 und an einen Anschluss 32 des Wasserspenders 2 angeschlossen, der seinerseits mit einer manuell bedienbaren Einrichtung 33 zur Erzeugung von Steuerbefehlen verbunden ist. Die manuell bedienbare Einrichtung ist dabei beispielhaft als Tastschalter 33 ausgebildet. Wird nun der Tastschalter 33 betätigt, so wird ein elektrischer Steuerbefehl erzeugt und zur Steuereinrichtung 25 des Enthärtungsmoduls 3 übertragen.

Der Anschluss 28 ist zum Anschließen einer Steuerleitung vorgesehen, welche die Steuereinrichtung 25 des Enthärtungsmoduls 3 mit einem an den Anschluss 22 angeschlossen Haushaltsgerät verbindet. Im Ausführungsbeispiel ist daher der Anschluss 28 nicht belegt.

Die Wasserenthärtungseinrichtung 19 des Enthärtungsmoduls 3 umfasst einen lonentauscher und eine Regeneriereinrichtung zum Regenerieren des lonentauschers, welche im Wesentlichen im Inneren des Gehäuses 13 angeordnet sind. Um die Regeneriereinrichtung mit Regeneriermittel befüllen zu können, ist am Gehäuse 13 eine Einfülleinrichtung 36 angeordnet. Das Regeneriermittel wird zur Bereitung einer Regenerierflüssigkeit benötigt, mit der der lonentauscher durchspült und so regeneriert werden kann. Um verbrauchte Regenerierflüssigkeit aus dem Enthärtungsmodul 3 abführen zu können, ist ein Anschluss 37 zur Abgabe von Regenerierflüssigkeit vorgesehen, an den im Ausführungsbeispiel bestimmungsgemäß eine als Ablaufschlauch 38 ausgebildete Ablaufleitung 38 angeschlossen ist. Das stromabwärtige Ende des Ablaufschlauchs 38 ist dabei mit einer gebäudeseitig installierten Abwasserentsorgungseinrichtung AR verbunden, bei der es sich beispielsweise um ein Abwasserrohr AR handeln kann.

Ferner verbindet eine als Ablaufschlauch 39 ausgebildete Ablaufleitung 39 den Abwasseranschluss 10 der Geschirrspülmaschine 1 mit dem Abwasserrohr AR, so dass Abwasser der Geschirrspülmaschine 1 problemlos entsorgt werden kann.

Um das Enthärtungsmodul 3 mit der erforderlichen elektrischen Energie zu versorgen, ist weiterhin ein Netzanschluss 40 vorgesehen, an den ein Netzkabel 41 angeschlossen ist, welches bestimmungsgemäß mit einer externen Energieversorgung SD verbunden ist, welche als haushaltsübliche Steckdose ausgebildet sein kann.

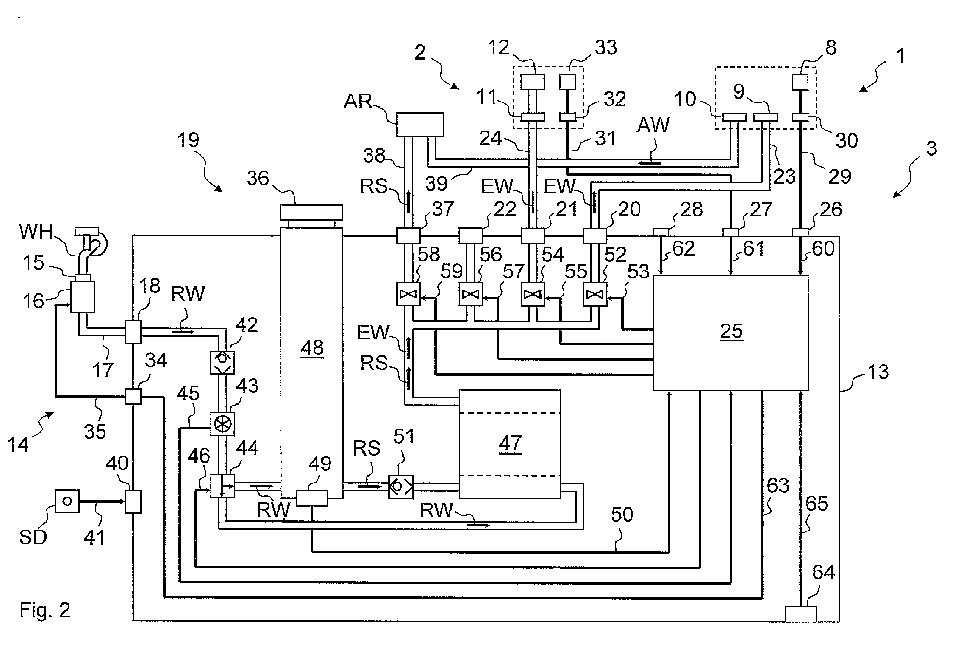

Weitere Details des Ausführungsbeispiels werden nun anhand der Figur 2 erläutert. Die Rohwasserzulaufeinrichtung 14 umfasst im Inneren des Gehäuses 13 des Enthärtungsmoduls 19 einen Rückflussverhinderer 42, einen Durchflusszähler 43 und eine Rohwasserweiche 44. Der Rückfluss- bzw. Rücksaugverhinderer 42 ist stromabwärts des gehäusefesten Anschlussstücks 18 angeordnet und kann als selbsttätig schließendes Rückschlagventil oder dergleichen ausgebildet sein. Er dient dazu, ein Rücksaugen von Flüssigkeit aus dem Enthärtungsmodul 3 in die externe Wasserversorgungseinrichtung WH zu verhindern, welche zu einer Verunreinigung des dort befindlichen Wassers führen könnte. Der Durchflusszähler 43 ist stromabwärts des Rücksaugverhinderers 42 angeordnet und erfasst die Menge des aufgenommenen Rohwassers RW. Der Durchflusszähler 43 kann als Flügelradzähler ausgebildet sein und ist über eine Messleitung 45 mit der Steuereinrichtung 25 des Enthärtungsmoduls 3 verbunden, so dass die jeweils erfasste Menge als Information an die Steuereinrichtung 25 übertragbar ist. Den stromabwärtigen Abschluss der Rohwasserzulaufeinrichtung 14 bildet die Rohwasserweiche 44, welche über eine Steuerleitung 46 durch die Steuereinrichtung 25 steuerbar ist.

Ein erster Ausgang der Rohwasserweiche 44 ist mit einem lonentauscher 47 und ein zweiter Ausgang der Rohwasserweiche 44 mit einem Regeneriermittelbehälter 48 verbunden. Auf diese Weise kann sowohl der lonentauscher 47 als auch der Regeneriermittelbehälter 48 mit Rohwasser RW beschickt werden. Der lonentauscher 47 ist dabei zur Enthärtung des Rohwassers RW ausgebildet, wobei er hierzu ein lonentauschermaterial enthält, beispielsweise ein lonentauscherharz, welches vom Rohwasser RW durchströmbar ist. Der Regeneriermittelbehälter 48 ist zur Bildung einer Regenerierflüssigkeit RS unter Verwendung von Rohwasser RW und einem Regeneriermittel ausgebildet. Bei dem Regeneriermittel kann es sich um über die Einfülleinrichtung 36 einfüllbares Natriumchlorid, also um Salz, handeln, so dass als Regenerierflüssigkeit RS eine Regeneriersole RS gebildet werden kann.

Dem Regeneriermittelbehälter 48 ist ein Füllstandsensor 49 zur Erfassung des Füllstands des Regeneriermittels zugeordnet. Dieser ist über eine Messleitung 50 mit der Steuereinrichtung 25 verbunden, so dass diese bei einem zu geringen Füllstand beispielsweise eine Warnmeldung über eine nicht gezeigte Ausgabeeinrichtung ausgeben kann.

Die gebildete Regenerierflüssigkeit RS kann über einen weiteren Rücksaugverhinderer 51, der ebenfalls als Rückschlagventil ausgebildet sein kann, in den lonentauscher 47 eingeleitet werden, so dass das lonentauschermaterial von der Regeneriersole RS durchströmbar ist, um so regeneriert zu werden. Dabei dient der Rücksaugverhinderer 51 dazu, dass eine Übertragung von Flüssigkeit aus dem lonentauscher 47 in den Regeneriermittelbehälter 48 verhindert ist.

Stromabwärts des lonentauschers 47 ist ein steuerbares Ausgangsventil 52 angeordnet, welches zur Steuerung der Abgabe von enthärtetem Rohwasser EW über den Anschluss 20 ausgebildet ist. Hierzu ist das Ausgangsventil 52 über eine Steuerleitung 53 mit der Steuereinrichtung 25 verbunden. Parallel dazu ist ein weiteres steuerbares Ausgangsventil 54 zur Steuerung der Abgabe von enthärtetem Rohwasser EW über den Anschluss 21 angeordnet, welches über eine Steuerleitung 55 mit der Steuereinrichtung 25 verbunden ist. Ebenso ist ein drittes steuerbares Ausgangsventil 56 zur Steuerung der Abgabe von enthärtetem Rohwasser EW über den Anschluss 212angeordnet, welches zur Steuerung der Abgabe von enthärtetem Rohwasser EW über den Anschluss 22 vorgesehen und über eine Steuerleitung 57 mit der Steuereinrichtung 25 verbunden ist. Ein weiteres parallel angeordnetes steuerbares Ausgangsventil 58 ist zur Steuerung der Abgabe von Regeneriersole RS über den Anschluss 37 vorgesehen. Dieses Ausgangsventil 58 ist über eine Steuerleitung 59 mit der Steuereinrichtung 25 verbunden.

Weiterhin umfasst das Enthärtungsmodul 3 eine elektrische Verbindungsleitung 60, welche den Anschluss 26 mit der Steuereinrichtung 25 verbindet. Eine weitere elektrische Verbindungsleitung 61 dient der Verbindung des Anschlusses 27 mit der Steuereinrichtung 25 und eine elektrische Verbindungsleitung 62 der Verbindung des Anschlusses 28 mit der Steuereinrichtung 25. Weiterhin ist eine elektrische Verbindungsleitung 63 vorgesehen, welche den Anschluss 34 mit der Steuereinrichtung 25 verbindet.

Die Funktion der Anordnung 1, 2, 3 ist nun die Folgende: sofern für einen Arbeitsprozess der Geschirrspülmaschine 1 eine Aufnahme von enthärtetem Rohwasser EW vorgesehen ist, erzeugt deren Steuereinrichtung 8 einen Steuerbefehl zur Anforderung von enthärtetem Rohwasser EW, der über den Anschluss 30, die Steuerleitung 29, den Anschluss 26 und die elektrische Verbindungsleitung 60 zu der Steuereinrichtung 25 des Enthärtungsmoduls 3 übertragen wird. Die Steuereinrichtung 25 erzeugt dann einen Steuerbefehl zum Öffnen des Zulaufventils 16, der über die elektrische Verbindungsleitung 63, den Anschluss 34 und die Steuerleitung 35 zum Zulaufventil 16 übertragen wird, so dass dieses geöffnet wird. Weiterhin wird durch die Steuereinrichtung 25 ein Steuerbefehl zum Öffnen des Ausgangsventils 52 erzeugt, der über die Steuerleitung 53 zu diesem übertragen wird. Auf diese Weise strömt durch den Druck der externen Rohwasserversorgungseinrichtung WH Rohwasser RW über den Rohwasseranschluss 15, das Zulaufventil 16, den Zulaufschlauch 17, das Anschlussstück 18, den Rückschlagverhinderer 42 und den Flügelradzähler 43 zur Rohwasserweiche 44. Diese ist zu diesem Zeitpunkt über die Steuerleitung 46 so gesteuert, dass das Rohwasser RW zum lonentauscher 47 geleitet wird. Das Rohwasser RW strömt durch den lonentauscher 47 hindurch und wird dabei enthärtet. Stromabwärts des lonentauschers 47 wird das enthärtete Rohwasser EW über das Ausgangsventil 52, den Anschluss 20 und den Verbindungsschlauch 23 zum Zulaufwasseranschluss 9 der Geschirrspülmaschine 1 geleitet, so dass diese enthärtetes Rohwasser EW aufnehmen kann. Wenn die Geschirrspülmaschine 1 eine hinreichend große Menge von enthärtetem Rohwasser EW aufgenommen hat, so wird der Steuerbefehl zur Anforderung von enthärtetem Rohwasser EW durch die Steuereinrichtung 8 aufgehoben, so dass wenigstens das Ausgangsventil 52 geschlossen wird. Sofern zu diesem Zeitpunkt keine Abgabe von enthärtetem Rohwasser EW an ein anderes Haushaltsgerät stattfindet, kann im Regelfall auch das Zulaufventil 16 geschlossen werden.

Soll weiterhin dem Wasserspender 2 enthärtetes Rohwasser EW entnommen werden, so wird der Tastschalter 33 manuell betätigt, so dass einen Steuerbefehl zur Anforderung von enthärtetem Rohwasser EW erzeugt wird, der über den Anschluss 32, die Steuerleitung 31, den Anschluss 27 und die elektrische Verbindungsleitung 61 zu der Steuereinrichtung 25 des Enthärtungsmoduls 3 übertragen wird. Die Steuereinrichtung 25 erzeugt dann erneut einen Steuerbefehl zum Öffnen des Zulaufventils 16, der über die Verbindungsleitung 63, den Anschluss 34 und die Steuerleitung 35 zum Zulaufventil 16 übertragen wird, so dass dieses geöffnet wird. Weiterhin wird durch die Steuereinrichtung 25 ein Steuerbefehl zum Öffnen des Ausgangsventils 54 erzeugt, der über die Steuerleitung 55 zu diesem übertragen wird. Auf diese Weise strömt das Rohwasser RW auf dem bereits beschriebenen Weg zum lonentauscher 47. Aus dem lonentauscher 47 tritt enthärtetes Rohwasser EW aus, welches über das Ausgangsventil 54, den Anschluss 21 und den Verbindungsschlauch 24 zum Zulaufwasseranschluss 11 des Wasserspenders 2 geleitet, so dass es dort über den Wasserauslass 12 abgegeben werden kann. Wird nun der Tastschalter 33 in den unbetätigten Zustand zurückversetzt, so wird der Steuerbefehl zur Anforderung von enthärtetem Rohwasser EW aufgehoben, so dass wenigstens das Ausgangsventil 54 und gegebenenfalls das Zulaufventil 16 geschlossen wird.

Sofern mittels des Flügelradzählers 43 festgestellt wird, das die insgesamt aufgenommene Menge an Rohwasser RW einen Grenzwert überschritten hat, so wird durch die Steuereinrichtung 25 eine Regenerierung des lonentauschers 47 eingeleitet. Hierzu wird das Zulaufventil 16 erneut in der bereits beschriebenen Art geöffnet. Ebenso wird durch einen Steuerbefehl über die Steuerleitung 59 das Ausgangsventil 58 geöffnet. Die Rohwasserweiche 44 wird dabei so gesteuert, dass das aufgenommene Rohwasser RW in den Regeneriermittelbehälter 48 geleitet ist. Durch die Zufuhr von Rohwasser RW in den Regeneriermittelbehälter 48 wird dort befindliche Regeneriersole RS durch den lonentauscher 47 gedrückt und dieser regeneriert. Die den lonentauscher 47 verlassende Regeneriersohle RS wird dann über das Ausgangsventil 58 und den Ablaufschlauch 38 zum Abwasserrohr AR gefördert und so als Abwasser AW entsorgt.

Bei der Durchführung der beschriebenen Funktionsabläufe werden sämtliche Flüssigkeitsbewegungen durch den Druck in der externen Rohwasserversorgungseinrichtung WH bewirkt. Das Enthärtungsmodul 3 benötigt dabei keine eigene Pumpe. Gleichwohl könnte eine Pumpe vorgesehen sein, insbesondere wenn das Enthärtungsmodul 3 an eine externe Rohwasserversorgungseinrichtung WH angeschlossen werden soll, welche nur ein unter geringem Druck stehendes Rohwasser bereitstellt.

Weiterhin weist das Enthärtungsmodul 3 ein Sicherheitssystem auf, dessen Funktion im Folgenden beschrieben wird.

Das Zulaufventil 16 ist so ausgeführt, dass es schließt, wenn es nicht angesteuert ist, um so im Schadensfall einen größeren Austritt von Leckwasser aus dem Enthärtungsmodul 3 zu verhindern, wenn diese abgeschaltet ist. Dabei kann dass Enthärtungsmodul 3 einen Leckwassersensor 64 aufweisen, der zum Erfassen von im Bereich des Enthärtungsmoduls 3 austretendem Leckwasser vorgesehen ist, während dieses eingeschaltet ist. Er kann beispielsweise an einer in einem Bodenbereich des Enthärtungsmoduls 3 vorgesehenen Leckwasserauffangwanne angeordnet sein und mit der Steuereinrichtung 25 des Enthärtungsmoduls 3 über eine Messleitung 65 verbunden sein, so dass die Steuereinrichtung 25 das Enthärtungsmodul 3 bei erkanntem Leckwasser abschalten kann. Insbesondere kann sie das Enthärtungsmodul 3 stromlos setzen und das Zulaufventil 16 schließen. Auf diese Weise kann auch ein größerer Austritt von Leckwasser bei einer zunächst eingeschalteten Geschirrspülmaschine 1 verhindert werden.

Der Wasserzulaufschlauch 17 kann dabei als doppelwandiger Sicherheitsschlauch 17 mit einem inneren wasserführenden Schlauch und einem äußeren Hüllschlauch ausgebildet sein. Tritt aus dem wasserführenden Schlauch Wasser aus, so wird es im Zwischenraum zwischen dem wasserführenden Schlauch und dem Hüllschlauch in Richtung des Leckwassersensors 64 geleitet, so dass auch im Bereich des Wasserzulaufschlauchs 17 austretendes Leckwasser detektiert werden kann, um dann entsprechende Maßnahmen einleiten zu können.

### Bezugszeichenliste

- 1: Haushaltsgeschirrspülmaschine
- 2: Wasserspender
- 3: Enthärtungsmodul
- 4: Gehäuse
- 5: Spülbehälter
- 6: Türe
- 7: Spülkammer
- 8: Steuereinrichtung
- 9: Zulaufwasseranschluss
- 10: Abwasseranschluss
- 11: Zulaufwasseranschluss
- 12: Wasserauslass
- 13: Gehäuse
- 14: Rohwasserzulaufeinrichtung
- 15: Rohwasseranschluss
- 16: Zulaufventil
- 17: Zulaufschlauch
- 18: gehäusefestes Anschlussstück
- 19: Wasserenthärtungseinrichtung
- 20: Anschluss zur Abgabe des enthärteten Rohwassers
- 21: Anschluss zur Abgabe des enthärteten Rohwassers
- 22: Anschluss zur Abgabe des enthärteten Rohwassers
- 23: Verbindungsschlauch
- 24: Verbindungsschlauch
- 25: Steuereinrichtung
- 26: Anschluss für Steuerleitung
- 27: Anschluss für Steuerleitung
- 28: Anschluss für Steuerleitung
- 29: Steuerleitung
- 30: Anschluss für Steuerleitung
- 31: Steuerleitung
- 32: Anschluss für Steuerleitung
- 33: manuelle Einrichtung zur Erzeugung von Steuerbefehlen, Tastschalter
- 34: Anschluss für Steuerleitung
- 35: Steuerleitung
- 36: Einfülleinrichtung für Regeneriermittel
- 37: Anschluss zur Abgabe von Regenerierflüssigkeit
- 38: Ablaufleitung, Ablaufschlauch
- 39: Ablaufleitung, Ablaufschlauch
- 40: Anschluss für Netzkabel
- 41: Netzkabel
- 42: Rückschlagverhinderer, Rückschlagklappe
- 43: Durchflusszähler, Flügelradzähler
- 44: Rohwasserweiche, Umschaltventil
- 45: Messleitung
- 46: Steuerleitung
- 47: lonentauscher
- 48: Regeneriereinrichtung, Regeneriermittelbehälter
- 49: Füllstandssensor
- 50: Messleitung
- 51: Rückschlagverhinderer, Rückschlagklappe
- 52: Ausgangsventil
- 53: Steuerleitung
- 54: Ausgangsventil
- 55: Steuerleitung
- 56: Ausgangsventil
- 57: Steuerleitung
- 58: Ausgangsventil
- 59: Steuerleitung
- 60: Verbindungsleitung
- 61: Verbindungsleitung
- 62: Verbindungsleitung
- 63: Verbindungsleitung
- 64: Leckwassersensor
- 65: Messleitung

- AR: externe Abwasserentsorgungseinrichtung, Abwasserrohr
- SD: externe Energieversorgungseinrichtung, Steckdose
- WH: externe Rohwasserversorgungseinrichtung, Wasserhahn

- AW: Abwasser
- EW: enthärtetes Wasser
- RS: Regenerierflüssigkeit, Regeneriersole
- RW: Rohwasser

## Patentansprüche

1. Enthärtungsmodul zur Enthärtung von Rohwasser (RW) für wenigstens ein wasserführendes Haushaltsgerät (1, 2), **dadurch gekennzeichnet, dass** es als außerhalb des wenigstens einen wasserführenden Haushaltsgeräts (1, 2) anordenbare Baueinheit (3) ausgeführt ist und dass es eine Rohwasserzulaufeinrichtung (14), die zur Aufnahme des Rohwassers (RW) mit einer externen Rohwasserversorgungseinrichtung (WH) verbindbar ist, eine Wasserenthärtungseinrichtung (19) zur Enthärtung des aufgenommenen Rohwassers (RW) sowie wenigstens einen stromabwärts der Wasserenthärtungseinrichtung (19) angeordneten und zum Verbinden mit dem wasserführenden Haushaltsgerät (1, 2) vorgesehen Anschluss (20, 21, 22) zur Abgabe des enthärteten Rohwassers (EW) aufweist.

2. Enthärtungsmodul nach einem der vorstehenden Ansprüche, **dadurch gekennzeichnet, dass** eine automatische Steuereinrichtung (25) zur Steuerung des Enthärtungsmoduls (3) vorgesehen ist, welche zur Verarbeitung von Steuerbefehlen ausgebildet ist, welche von einem angeschlossenen wasserführenden Haushaltsgerät zum Enthärtungsmodul (3) übertragbar sind.

3. Enthärtungsmodul nach einem der vorstehenden Ansprüche, **dadurch gekennzeichnet, dass** es als Durchlaufenthärtungsmodul (3) ausgebildet ist.

4. Enthärtungsmodul nach einem der vorstehenden Ansprüche, **dadurch gekennzeichnet, dass** die Wasserenthärtungseinrichtung (19) einen lonentauscher (47) umfasst.

5. Enthärtungsmodul nach einem der vorstehenden Ansprüche, **dadurch gekennzeichnet, dass** die Wasserenthärtungseinrichtung (19) eine Regeneriereinrichtung (48) zum Regenerieren des lonentauschers (47) aufweist.

6. Enthärtungsmodul nach einem der vorstehenden Ansprüche, **dadurch gekennzeichnet, dass** es einen Anschluss (37) zur Abgabe einer Regenerierflüssigkeit (RS) aufweist, der zum Verbinden mit einer externen Wasserentsorgungseinrichtung (AR) vorgesehen ist.

7. Enthärtungsmodul nach einem der vorstehenden Ansprüche, **dadurch gekennzeichnet, dass** wenigstens einem der Anschlüsse (20, 21, 22) zur Abgabe des enthärteten Rohwassers (EW) und/oder dem Anschluss (37) zur Abgabe der Regenerierflüssigkeit (RS) ein steuerbares Ausgangsventil (52, 54, 56, 58) zugeordnet ist.

8. Enthärtungsmodul nach einem der vorstehenden Ansprüche, **dadurch gekennzeichnet, dass** wenigstens einer der Anschlüsse zur Abgabe (20, 21, 22) des enthärteten Rohwassers (EW) und/oder der Anschluss (37) zur Abgabe der Regenerierflüssigkeit (RS) selbstschließend ausgebildet ist.

9. Enthärtungsmodul nach einem der vorstehenden Ansprüche, **dadurch gekennzeichnet, dass** ein Leckwassersensor (65) vorgesehen ist.

10. Wasserführendes Haushaltsgerät, insbesondere Haushaltsgeschirrspülmaschine (1), Dampfgarer, Kaffeemaschine, Wasserspender (2) oder Eiswürfelbereiter, **dadurch gekennzeichnet, dass** es mit einem Enthärtungsmodul (3) nach wenigstens einem der Ansprüche 1 bis 9 zur Aufnahme von enthärtetem Rohwasser (EW) verbindbar ist und dass es einen Anschluss (30, 32) für eine Steuerleitung (29, 31) aufweist, welche zur Übertragung von Steuerbefehlen an das Enthärtungsmodul (3) vorgesehen ist.

11. Wasserführendes Haushaltsgerät nach Anspruch 10, **dadurch gekennzeichnet, dass** ein Steuerbefehl zur Anforderung von enthärtetem Rohwasser (EW) übertragbar ist.

12. Wasserführendes Haushaltsgerät nach Anspruch 10 oder 11, **dadurch gekennzeichnet, dass** das Haushaltsgerät (2) eine manuell bedienbare Einrichtung (33) zur Erzeugung von über den Anschluss übertragbaren Steuerbefehlen aufweist.

13. Wasserführendes Haushaltsgerät nach einem der Ansprüche 10 bis 12, **dadurch gekennzeichnet, dass** das Haushaltsgerät (1) eine Steuereinrichtung (8) zur Steuerung von Arbeitsprozessen des Haushaltsgeräts (1) aufweist, welche zusätzlich zur Erzeugung von über den Anschluss (30) übertragbaren Steuerbefehlen ausgebildet ist.

14. Wasserführendes Haushaltsgerät nach einem der Ansprüche 10 bis 13, **dadurch gekennzeichnet, dass** das Haushaltsgerät (1) zur Aufnahme einer Regenerierflüssigkeit (RS) von dem Enthärtungsmodul (3) und zur Abgabe der Regenerierflüssigkeit (RS) an eine externe Abwasserentsorgungseinrichtung (AR) ausgebildet ist.

15. Anordnung mit wenigstens einem wasserführenden Haushaltsgerät (1, 2), insbesondere mit einer Haushaltsgeschirrspülmaschine (1), einem Dampfgarer, einer Kaffeemaschine, einem Wasserspender (2) und/oder einem Eiswürfelbereiter, und mit einem Enthärtungsmodul (3) zur Enthärtung von Rohwasser (RW) für das wenigstens eine wasserführende Haushaltsgerät (1, 2), **dadurch gekennzeichnet, dass** das wenigstens eine wasserführende Haushaltsgerät (1, 2) nach wenigstens einem der Ansprüche 10 bis 14 und/oder das Enthärtungsmodul (3) nach wenigstens einem der Ansprüche 1 bis 9 ausgebildet ist.
